# EUROPEAN PATENT SPECIFICATION

(11) **EP 4 200 355 B1**
(45) Date of publication and mention of the grant of the patent: **05.11.2025**
(21) Application number: 21859139.4
(22) Date of filing: 19.08.2021
(51) Int. Cl.: C08G 63/91, C09D 167/02, C08F 20/10, C08G 18/08, C08J 11/04, C08L 75/06

(54) **PROCESS AND SYSTEM TO UTILIZE WASTE POLYESTER IN A CONTINUOUS POLYESTER POLYMERIZATION PROCESS**
VERFAHREN UND SYSTEM ZUR VERWENDUNG VON POLYESTERABFÄLLEN IN EINEM KONTINUIERLICHEN POLYESTERPOLYMERISATIONSVERFAHREN
PROCÉDÉ ET SYSTÈME POUR L'UTILISATION DE DÉCHETS DE POLYESTER DANS UN PROCÉDÉ DE POLYMÉRISATION EN CONTINU DE POLYESTER

(30) Priority: 20.08.2020 US 202063068200 P
(43) Date of publication of application: 28.06.2023
(73) Proprietor: Auriga Polymers, Inc., Charlotte, North Carolina 28217 (US)
(72) Inventor: AWASTHI, Yashwant, Charlotte, North Carolina 28278 (US); KUSHWAHA, Durgesh Chand, Greensboro, North Carolina 27409 (US); OSORNIO, Miguel, Angel, Spartanburg, South Carolina 29301 (US); KOWALSKE, Michael, Spartanburg, South Carolina 29301 (US)
(74) Representative: Dompatent Partnerschaft von Patent- und Rechtsanwälten mbB
(86) International application number: PCT/US2021/046703
(87) International publication number: WO 2022/040434

(56) References cited:
- WO-A1-2019/162265
- US-A- 6 162 837
- US-A1- 2003 134 915
- US-A1- 2007 066 792
- US-A1- 2009 124 716
- US-A1- 2016 229 980

## Description

### FIELD OF THE INVENTION

This invention relates to an energy efficient method and system of utilizing polyester waste in a polyester continuous polymerization process. In particular the waste is mixed with a side-stream of the prepolymer in a centrifugal mixer and returned to the unit to complete the polymerization.

### BACKGROUND OF THE INVENTION

In order to meet the global need for a circular economy in which plastics are reused and recycled, there is a need for low cost processes to recycle these plastics back into the same state as the original virgin plastic. Poly(ethylene terephthalate), PET, is the plastic of choice for use in bottles for water, carbonated soft drinks, and other packaging articles. These bottles and other containers are easily recovered from consumer recycled waste by sorting, granulation, washing and further classification into streams of clear polyester granulates, or flakes (PCR). In order to meet the regulations directed to the use of polyester for food contact applications, further purification of the PCR is required to remove any absorbed contaminants, and to increase the molecular weight to that of the standard bottle resins to be able to reuse the PCR. The major brand owners of carbonated soft drinks and bottle water have set goals that the PCR content in the PET resin they purchase be 50% by 2030.

It is also known to chemically depolymerize waste post -consumer polyester (PCR) into their starting raw materials (monomers) that can then be used to manufacture PET resins. These processes use methanolysis, hydrolysis, or glycolysis reactions to depolymerize the waste polyester to the basic raw materials such as dimethyl terephthalate, terephthalic acid, glycol or the monomer (bis-hydroxymethyl terephthalate). These processes all require additional steps in order to purify the raw materials or monomer, before they can be used as a feedstock, or blended with virgin feedstock, for manufacturing PET, that lead to an increase in cost.

In a methanolysis polyethylene terephthalate (PET) process, waste PET is reacted with methanol to produce the raw materials dimethyl terephthalate (DMT) and ethylene glycol (EG). These reaction products must be purified to meet the same specifications as virgin feedstock before being used to produce virgin polyester (polyester formed from its raw materials). However, most commercial PET production facilities use terephthalic acid (TA) rather than DMT and therefore additional processing is required to convert the DMT to TA.

Hydrolysis of PET is reacting waste PET with water to depolymerize into TA and EG. However, it is known that certain types of contaminants generally present in waste PET are very difficult and require additional purification steps to obtain high purity TA.

Glycolysis of PET is reacting waste PET with glycol (such as EG) to produce the monomer bis-hydroxyethyl terephthalate (BHET) and other oligomers. This process has significant advantages over methanolysis or hydrolysis primarily because the BHET may be used as a raw material in either a DMT or TA polyester production process without significant major modification of the production facility. However, the BHET must be purified before it can be used to manufacture PET resins having the same quality standards as virgin PET.

Various processes have been disclosed in which the PCR is melted in an extruder and added to the esterification reactor of a continuous polymerization unit. U.S. Patent Application 2003/0134915 discloses a process in which the PCR is melted, with the addition of ethylene glycol, and extruded into the esterification reactor for depolymerization with the oligomeric esterification product; this reaction product is then polymerized in the subsequent reactors of the continuous polymerization unit. The vacuum in the final polycondensation reactor ("finisher") removes and contaminants that were absorbed in the PCR. The amorphous pellets can be solid phase polymerized to the molecular weight required for the container application, or can be polymerized to the final molecular weight in the finisher. The current processes for adding PCR flake to existing CP lines run at an average of 25% recycle content. The latest CP lines being installed have a capacity of over 30 tons/day and to retrofit these lines for the addition of 50% PCR would require extruders capable of operating at 15 tons/hour, exceeding the rate for current extruder technology. The capital cost for one or more high throughput extruders, and the cost of the energy lost in the motor and gear boxes of these extruders, makes this technology unattractive.

In addition the glycol recovered during the PET continuous manufacturing process is recycled back to be used with the virgin glycol in the initial esterification process with terephthalic acid. The contaminants and degradation products for the addition of a high amount of PCR flake would require the recovered glycol to be purified before use as a starting raw m ateri al

WO2019/162265 discloses a conceptual process in which PCR flakes and heated before being mixed in a dynamic mixer with an intermediate stream from a PET continuous polymerization unit to depolymerize the PCR before being returned to the continuous polymerization unit for completion of its polymerization. The patent application does not provide any examples that support the enablement of this process. US2007/066792 discloses a process for preparing a modified polymer comprising a) discharging from a polymerization reactor a polyester melt to form a continuously discharged polymer melt stream, b) withdrawing a portion of the polymer melt from the continuously discharged polymer melt stream to form a slipstream, c) introducing a compositional modifier into the slipstream to form a modifier containing slipstream, and d) introducing the modifier containing slipstream to a location upstream from the point of withdrawing the polymer melt from the discharged polymer melt stream in step b), and wherein a post-consumer recycle polyester polymer is added to the continuously produced polymer melt.

There is therefore the need for a more energy efficient and low capital cost process to utilize PCR flake in a continuous PET polymerization unit at rates up to 75%.

### BRIEF DESCRIPTION OF THE DRAWINGS

Fig. 1 illustrates the process flow sheet of one embodiment of the invention.
Fig. 2 illustrates the process flow sheet of a second embodiment of the invention.

### DESCRIPTION OF THE INVENTION

The present invention may be understood more readily by reference to the following detailed description of the invention taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention.

The ranges set forth herein include both numbers at the end of each range and any conceivable number there between, as that is the very definition of a range. It is therefore to be understood that the ranges and limits mentioned herein include all ranges located within the prescribed limits (i.e., subranges). For instance, a range from about 100 to about 200 also includes ranges from 110 to 150, 170 to 190, 153 to 162, and 145.3 to 149.6. Further, a limit of up to about 7 also includes a limit of up to about 5, up to 3, and up to about 4.5, as well as ranges within the limit, such as from about 1 to about 5, and from about 3.2 to about 6.5 as examples.

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention.

As used herein, the terms "comprise", "comprises", "containing"; and "has", "have", "having"; and "includes", "include" and "including"; are open-ended transition terms used to transition from a subject recited before the term to one or more elements recited after the term, where the element or elements listed after the transition term are not necessarily the only elements that make up the subject.

The term "polyester", as used herein, is intended to include "copolyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds, for example, branching comonomers. Typically the difunctional carboxylic acid can be a dicarboxylic acid and the difunctional hydroxyl compound can be a dihydric alcohol such as, for example, glycols and diols. The term "glycol" as used herein includes, but is not limited to, diols, glycols, and/or multifunctional hydroxyl compounds, for example, branching comonomers.

The term "residue", as used herein, means any organic structure incorporated into a polymer through a polycondensation and/or an esterification reaction from the corresponding monomer. The term "repeating unit", as used herein, means an organic structure having a dicarboxylic acid residue and a diol residue bonded through a carbonyloxy group. Thus, for example, the dicarboxylic acid residues may be derived from a dicarboxylic acid monomer or its associated acid halides, esters, salts, anhydrides, and/or mixtures thereof. As used herein, therefore, the term "dicarboxylic acid" is intended to include dicarboxylic acids and any derivative of a dicarboxylic acid, including its associated acid halides, esters, half-esters, salts, half-salts, anhydrides, mixed anhydrides, and/or mixtures thereof, useful in a reaction process with a diol to make polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, and/or mixtures thereof or residues thereof useful in a reaction process with a diol to make polyester.

The polyesters used in the present invention typically can be prepared from dicarboxylic acids and diols which react in substantially equal proportions and are incorporated into the polyester polymer as their corresponding residues. The polyesters of the present invention, therefore, can contain substantially equal molar proportions of acid residues (100 mole %) and glycol (and/or multifunctional hydroxyl compound) residues (100 mole %) such that the total moles of repeating units is equal to 100 mole %. The mole percentages provided in the present disclosure, therefore, may be based on the total moles of acid residues, the total moles of diol residues, or the total moles of repeating units. For example, a polyester containing 5 mole % isophthalic acid, based on the total acid residues, means the polyester contains 5 mole % isophthalic acid residues out of a total of 100 mole % acid residues. Thus, there is 5 mole of isophthalic acid residues among every 100 moles of acid residues. In another example, polyester containing 1.5 mole % diethylene glycol, out of a total of 100 mole % glycol residues, has 1.5 moles of diethylene glycol residues among every 100 moles of glycol residues.

The polyester polymer of the invention contains ethylene terephthalate repeat units in the polymer chain. The polyester polymer comprises:
(a) a carboxylic acid component comprising at least 90 mole percent, at least 92 mole percent, at least 93 mole percent, or at least 96 mole percent of the residues of terephthalic acid or derivatives of terephthalic acid, or mixtures thereof, and
(b) a diol component comprising at least 90 mole percent, at least 92 mole percent, at least 93 mole percent, or at least 96 mole percent of the residues of ethylene glycol,
based on 100 mole percent of carboxylic acid component residues and 100 mole percent of hydroxyl component residues in the polyester polymer.

Polyester resins can optionally be modified by up to 10 wt. % of dicarboxylic acids other than terephthalic acid are useful in forming the resins of this invention. Suitable diacids can be aliphatic, alicyclic, or aromatic dicarboxylic acids such as isophthalic acid, 1,4-cyclohexanedicarboxylic acid; 1,3-cyclohexanedicarboxylic acid, succinic acid, glutaric acid, adipic acid, sebacic acid, 1,12-dodecanedioic acid; 2,6-naphthalenedicarboxylic acid, bibenzoic acid, oxalic acid, malonic acid, pimelic acid, suberic acid, azelaic acid, maleic acid, fumaric acid, phthalic acid, hemimellitic acid, trimellitic acid, trimesic acid, or mixtures of these and their equivalents. It is often suitable to use a functional acid derivative equivalent such as dimethyl, diethyl, or dipropyl ester of the dicarboxylic acid. The preferred modifying dicarboxylic acid is isophthalic acid or 2,6-naphthalenedicarboxylic acid.

Alternatively, polyester resins can optionally be modified by up to 10 wt. % of one or more different diols than ethylene glycol. In a typical PET process about 2 mole percent of diethylene glycol is formed by the esterification of ethylene glycol. Such additional diols include cycloaliphatic diols for example having 6 to 20 carbon atoms or aliphatic diols preferably having 3 to 20 carbon atoms. Examples of such diols to be included with ethylene glycol are: diethylene glycol, triethylene glycol, 1,2-cyclohexanedimethanol, 1,3-cyclohexanedimethanol, 1,4-cyclohexanedimethanol, propane-1,3-diol, butane-1,4-diol, pentane-1,5-diol, hexane-1,6-diol, 2-methyl-1,3-pentanediol, 2,2-dimethyl-1,3-pentanediol, 2,2,4-trimethylpentane-diol-(1,3), 2-ethylhexanediol-(1,3), 2,2-diethylpropane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, and 2,2-bis-(4 hydroxypropoxyphenyl)-propane. The preferred modifying diols are diethylene glycol, 1,4-cyclohexanedimethanol, 2-methyl-1,3-pentanediol and 2,2-dimethyl-1,3-pentanediol.

The polyesters of the invention can also comprise at least one chain extender. Suitable chain extenders include, but are not limited to, multifunctional (including, but not limited to, bifunctional) isocyanates, multifunctional epoxides, including for example, epoxylated novolacs, and phenoxy resins. In certain embodiments, chain extenders may be added at the end of the polymerization process or after the polymerization process. If added after the polymerization process, chain extenders can be incorporated by compounding or by addition during conversion processes such as injection molding or extrusion. The amount of chain extender used can vary depending on the specific monomer composition used and the physical properties desired but is generally about 0.1 to about 5 % by weight, or about 0.1 to about 2 % by weight, based on the total weight of the polyester.

In addition, the polyester compositions and the polymer blend compositions useful in the invention may also contain any amount of at least one additive, for example, from 0.01 to 2.5% by weight of the overall composition common additives such as colorants, dyes, mold release agents, flame retardants, reheat additives, plasticizers, stabilizers, including but not limited to, UV stabilizers, thermo-oxidative stabilizers and/or reaction products thereof, chain extenders and impact modifiers. Examples of thermo-oxidative stabilizers include phosphorus compounds and primary and secondary antioxidants commercially available for use in polyester resins. Examples of typical commercially available impact modifiers well known in the art and useful in this invention include, but are not limited to, ethylene/propylene terpolymers, functionalized polyolefins such as those containing methyl acrylate and/or glycidyl methacrylate, styrene-based block copolymeric impact modifiers, and various acrylic core/shell type impact modifiers. Examples of chain extenders include, but are not limited to, multifunctional (including, but not limited to, bifunctional) isocyanates, multifunctional epoxides, including for example, epoxylated novolacs, and phenoxy resins. Residues of such additives are also contemplated as part of the polyester composition.

In addition, certain agents which tone the polymer can be added to the polycondensation process. A bluing toner can be used to reduce the yellowness of the resulting polyester polymer melt phase product. Such bluing agents include cobalt salts, blue inorganic and organic toner(s) and the like. In addition, red toner(s) can also be used to adjust the redness. Organic toner(s), e.g., blue and red organic toner(s) can be used. The organic toner(s) can be fed as a premix composition. The premix composition may be a neat blend of the red and blue compounds or the composition may be dissolved or slurried in one of the polyester's raw materials, e.g., ethylene glycol.

The total amount of added toner components depends on the amount of inherent yellow color in the base polyester and the efficacy of the toner. Generally, a concentration of up to about 15 ppm of combined organic toner components and a minimum concentration of about 0.5 ppm are used, with the total amount of bluing additive typically ranging from about 0.5 ppm to about 10 ppm.

### Polymerization Process

Polyesters of the present invention are manufactured by a continuous process. A continuous process typically consists of four main process units, (i) slurry preparation vessel in which the dicarboxylic acid and diol are mixed, (ii) esterification unit, (iii) prepolymerization (or low polymerization) unit, and (iv) high polymerizer or finisher unit. In most designs the melt phase polymerization is conducted in one or more esterification reactors, one or more prepolymerizer and one or two high polymerizers. In some designs the esterification and prepolymerization is conducted in one vessel.

The terms "esterifier", "prepolymerizer", "high polymerizer" or "finisher" as used in this description and claims are intended to mean both single and multiple reactors in each unit. A typical polyesterification process is comprised of one or more stages and commercially carried out in one of two common pathways. For a process, which employs direct esterification in the initial stage of the process, the dicarboxylic acids react with one or more diols at a temperature of about 200° C to about 270° C to form macro-monomeric structures and a small condensate molecule, water. Because the reaction is reversible, the water is continuously removed to drive the reaction to the desired first stage product. In a like manner, when using diesters (versus diacids), an ester interchange process is used to react the ester groups of the diesters and diols with certain well known catalysts, such as manganese acetate, zinc acetate, or cobalt acetate. After completing the ester interchange reaction these catalysts are sequestered with a phosphorus compound, such as phosphoric acid, to prevent degradation during the polycondensation process.

Next, in the second stage of the reaction, either macro-monomeric structures (direct esterification products) or interchanged moieties (ester interchange products), commonly described as oligomeric esterification products, undergo a polycondensation reaction to form the polymer.

The reactants from the esterification stage are then continuously transferred to a prepolymerizer which has a slight vacuum, preferably less than about 200 mm mercury absolute, and operates in the range of approximately 240 to 300° C for approximately 30 to 75 minutes. This prepolymerizer can be an integral part of the esterification process. At this stage the prepolymer has a molecular weight, as measured by its Intrinsic Viscosity (IV), in the range of about 0.2 to about 0.3 dl/g. This prepolymer is then continuously transferred to an intermediate polymerizer, or directly to a high polymerizer where the vacuum is increased to less than about 10 millimeter mercury absolute, preferably less than about 5 mm, and the temperature is between approximately 260 and 300°. C. for approximately 45 minutes to 90 minutes. The diol is continuously removed in the prepolymerizer and high polymerizers, and recycled back to the esterifier.

This polymerization reaction is stopped when the required / targeted molecular weight is achieved and/or the maximum molecular weight of the design of the equipment is reached. The polyester is extruded through a die into strands which are quenched and cut into pellets, or cut under-water to form pellets. If necessary, the polyester pellets can be further polymerized to a higher molecular weight by well-known solid state polymerization processing techniques.

The catalysts generally used for the polycondensation reaction are compounds containing antimony, germanium, aluminum, titanium or other catalysts known to those skilled in the art, or mixtures thereof. The specific additives used and the point of introduction during the reaction is known in the art and does not form a part of the present invention. Any conventional system may be employed and those skilled in the art can select among various commercially-available systems for the introduction of additives so as to achieve an optimal result.

The terephthalic acid and/or ethylene glycol are preferably derived from a biomass feedstock rather than a petroleum based feedstock. In addition the use of chemically recycled terephthalic acid (or dimethyl terephthalate) and ethylene glycol from post-consumer polyester waste is also preferred for the polyesters of this invention.

### Addition of PCR flake

The inventive process is based on three principles to minimize thermal degradation of the PCR flake, reduce capital cost, avoid contamination of internally recycled EG and lower the energy losses associated with the addition of up to 75% PCR flake into a continuous polymerization (CP) line.

The first principle recognizes that the throughput of a CP unit for polymerization of polyester is limited by the design of the finisher for a target molecular weight (intrinsic viscosity). The reaction rate for the polycondensation is dominated by the diffusion of the ethylene glycol by-product from the molten liquid mass. In this last stage of the polymerization the viscosity of the polyester increases rapidly with the increase in molecular weight and these reactors are agitated by a horizontal stirrer with discs or cages that lift the molten polymer to create a thin film from which the ethylene glycol can diffuse into the high vacuum in the reactor. The spacing of the discs increases along the axis of the reactor based on the increase in viscosity and to ensure that thin films are created on these discs do not form a bridge between consecutive discs. In consequence, the design of the finisher reactor is based on the difference between the inlet and final desired molecular weight. Typical design of a disc-ring reactor is disclosed in U.S. Pat. No. 3,248,180 and of a cage reactor in U.S. Pat. No. 5,599,507. The inventive process provides nominally the same molecular weight of prepolymer entering the finisher vessel with PCR recycle rates up to about 50%, thus maintaining the throughput of the CP line to reach its target molecular weight.

The second principle to reduce the energy losses and capital expense associated with the addition of PCR flake to a CP unit by melting the PCR flake in a high throughput extruder. The third principle is to minimize any thermal degradation associated with the addition of the PCR flake and to separate any volatile organic compounds from entering the CP process.

Both of these latter principles are achieved in the inventive process by adding the PCR flake as a solid, without melting or heating, to a side stream of the prepolymer in a centrifugal mixer with a residence time of less than about 3 minutes, and returning this molten stream of mixed PCR flake and prepolymer, with nominally the same molecular weight as the prepolymer, back to the prepolymer stream that was not diverted to the mixer, and onto the finisher.

### Centrifugal mixer

Centrifugal mixers are commonly used in the refining of cocoa containing products such as chocolates. For example, WO2007/066362 describes such a mixer. In this case, the substance to be processed is guided in a preferably substantially horizontally arranged drum. In the drum is a rotating shaft, which is at least partially provided with pins spirally arranged to move the material along the drum. The rotating shaft is operated at high rotational speeds that throws the material against the inner walls of the drum by the action of centrifugal force.

The introduced substance, or mixture, is constantly mixed by the pins. The density of the pins can vary along the shaft. The pins may be similar, for example, have a round cross-sectional area of the same diameter. Alternatively, different types of pins can be arranged on the shaft, for example with different cross-sectional areas (polygonal, elliptical, round) or with different diameters. Preferably, the pins are cylindrical. By rotation of the pins, an energy input into the mixture, which takes place to the thin layer formed by the centrifugal force, is relatively uniform over the entire volume of the mixture.

Centrifugal mixers are ideally suitable for mixing PCR flake with a molten stream of prepolymer. The walls of the drum, and optionally the rotating shaft, are heated which, together with the friction of this mixture against the inner wall of the drum, provide sufficient energy to melt the PCR flake and to form a homogeneous molten mixture. An open centrifugal mixer is preferred for this invention as this provides a free discharge of the molten mixture without any restrictions which could cause stagnation and degradation of the mixture.

The rotating shaft operates at high speed, preferably greater than about 250 revolutions per minute (rpm), more preferably greater than about 500 rpm. The centrifugal mixer has an inlet for the molten prepolymer and one or more inlets for the PCR flakes, and the shaft is supported at the inlet end and driven by a motor. The residence time to melt the PCR flake and homogeneously mix it with the prepolymer is less than about three minutes. The residence time is partially set by the length of the barrel, the angle of the internal pins and can be controlled by the rotational speed of the shaft. Melting the PCR flake at atmospheric pressure with a short residence time minimizes any thermal degradation of the PCR flake and reduces energy losses compared to melting the PCR flake in an extruder, by minimizing the motor load, eliminating losses in the gear box and the energy required to compress the melt at the exit of the extruder.

### PCR flake

The preferred PCR flake is obtained from the recycling of PET bottles obtained by a mechanical recycling process. Typically the bottles collected from four main collection methods: curbside, drop-off, buy back and deposit refund programs. The first step in the mechanical recycling process is to sort and separate the plastic from the metals in the waste stream. Next non-rigid plastics are separated from the rigid plastics which are then washed to remove the labels and other surface contaminants. The rigid plastics are shredded or ground into flakes approximately in the size range of its maximum dimension of 9 to 12 mm.

At this stage the flake contains plastics from the closure, usually polyethylene or polypropylene, as well as flakes from green, blue and other colored bottles. The polyolefins are removed in a caustic wash process as these polymers float on the surface and the PET and other plastics heavier than water, such as polystyrene, polyvinyl chloride, etc., sink to the bottom. These flakes are then sorted by optical scanning to separate the colored flake from the transparent flakes. This stream of transparent flakes is then sorted by NIR to remove most of the other flakes leaving a stream of PCR PET flakes. The preferred specifications of PCR flake that can be used in this invention, without limiting the meaning of PCR to these specifications, are listed in Table 1.

**Table 1**

| Property | Values | Units |
|---|---|---|
| Intrinsic viscosity | 0.70 - 0.80 | dl/g |
| Moisture content | < 1.0 | % |
| Bulk density | 325 ± 50 | kg·m⁻³ |
| Flake size | Max 0.1 wt. % < 1 | mm |
| | Max 0.5 wt. % > 10 | mm |
| Blue flakes | 15 ± 5 | wt. % |
| Other colored flakes | ≤ 500 | ppm |
| PVC | ≤ 50 | ppm |
| Inert materials | ≤ 5 | ppm |
| Other polymers | ≤ 25 | ppm |

It is contemplated that in addition to using PCR flakes for this inventive process, post-industrial PET waste, such as off-specification resin and the like, can be used in conjunction or in place of the PCR flakes in the inventive process.

### Process

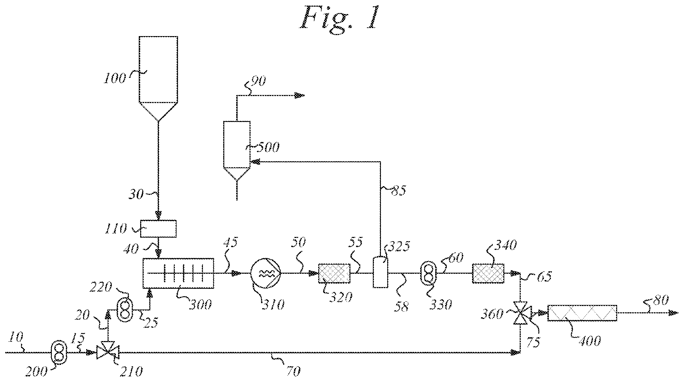

As illustrated in Fig. 1, the PCR flake is stored in the feed hopper **100** and is fed to a gravimetric metering device **110** connected to the inlets of the centrifugal mixer **300** through pipe **40.** The molten prepolymer from the CP unit, **10,** is fed through a polymer pump **200** to a three-way valve **210.** This three way valve **210** is set to divert a portion of the prepolymer stream to a pump **220** feeding another inlet of the centrifugal mixer **300.** The barrel of the centrifugal mixer **300** is heated by means of a heat transfer fluid to a temperature in the range of about 275° to about 290° C, and the rotating shaft of the mixer can also be heated to the same range of temperature. The shaft is rotated at a speed in the range of about 250 to about 1000 rpm. The energy used in the centrifugal mixer **300** is in the range of about 0.7 to about 1.2 MJ.kg⁻¹. The homogeneously mixed molten stream consisting of the PCR flake and the prepolymer exits the centrifugal mixer **300** through pipe **45** to a screw pump **310** which feeds a coarse filter **320.** The coarse filter **320** is used to increase the life of the screen changer filter or fine filter **340** and typically has a filtration rating of 1000 micron. The outlet of the coarse filter **320** is pumped through pipe **55** to a degasser **325** which removes any volatile products present in the PCR flake, or formed during the mixing process, through pipe **85** to a gas scrubber **500** and the volatile organic chemicals are exhausted through pipe **90.** The outlet of the degasser **325,** connects through pipe **58** to a polymer pump **330** which feeds the molten stream through pipe **60** to a fine filter **340** to remove any remaining contaminants from the PCR flake and has a filtration rating of about 60 to about 100 micron. The outlet of the fine filter **340** is directed through pipe **65** to a three-way valve **360.** The molten prepolymer, which is by-passed from the centrifugal mixer by the three way valve **210,** provides a stream **70** to the other inlet of three way valve **360,** the outlet stream of which is passed through a static mixer **400** and then flows through pipe **80** to the finisher of the CP unit.

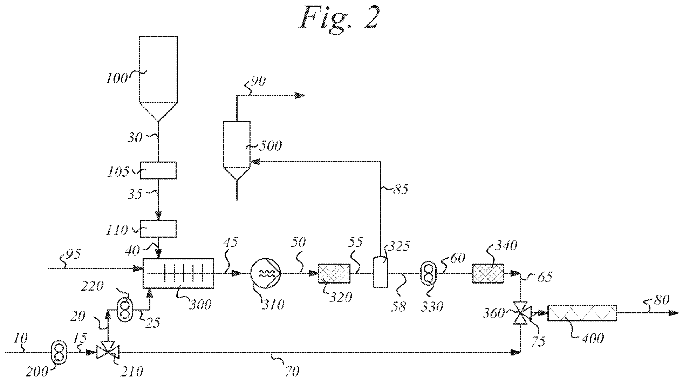

Fig. 2 illustrates an alternative process to that described above, in which a drier **105** is positioned between the PCR feed hopper **100** and the gravimetric metering device **110.** This is used in the instance of the PCR flake has high moisture which may hydrolyze the PCR when it is melted in the centrifugal mixer **300** such that the stream of the molten mixture of the PCR and prepolymer leaving the centrifugal mixer **300** has a molecular weight lower than the desired IV. In addition the process illustrated in Fig. 2 has an additional feed stream **95** to an inlet of the centrifugal mixer **300.** This feed stream may consist of ethylene glycol which will glycolize the molten mixture in the centrifugal mixer in the situation where the molecular weight of the PCR is high and needs to be reduced in order for the desired IV of the mixed polymer stream **45** leaving the centrifugal mixer **300.** This feed stream **95** can also be used to add toners to adjust the color of the mixture of the PCR flake and prepolymer, and other additives required in final product.

The ratio of the quantity of prepolymer stream **15** that is diverted via the three way valve **210** to the inlet **25** of the centrifugal mixer **300** to the quantity of PCR flake that is fed to the inlet **40** of the centrifugal mixer can range from about 1:5 to about 2:1.

The difference in IV and temperature between the prepolymer stream **10** that is diverted via the three way valve **210** to the mixing and filtering process by stream **20,** and the outlet stream **65** returning it through the three way valve **350** to the prepolymer stream **70** that was not diverted, should be in the range of about ± 0.10 dl/g, preferably about ± 0.05 dl/g, and in the range of about ± 5° C, respectively.

For a desired % PCR content in the final resin, this process provides the flexibility of diverting a different amount of the prepolymer to the centrifugal mixer **300** while maintaining a constant rate of the mixture to the finisher section of the CP unit. This allows the process to be adjusted depending on the IV of the PCR flake to meet the requirements that the IV of the prepolymer stream does not significantly change by the addition of PCR flake. This is illustrated in Table 2, in which for at a constant rate of prepolymer material to the finisher section (normalized to a dimensionless number of 100), the relative amount of the prepolymer diverted to the centrifugal mixer can be adjusted to give the same amount of PCR flake in the final polymer.

**Table 2**

| Prepolymer rate | % Prepolymer diverted to mixer | Prepolymer rate to mixer | PCR rate to mixer | Prepolymer + PCR rate | Total rate to finisher(s) | % PCR in final polymer |
|---|---|---|---|---|---|---|
| 75 | 20% | 15 | 25 | 40 | 100 | 25% |
| 75 | 30% | 22.5 | 25 | 47.5 | 100 | 25% |
| 75 | 40% | 30 | 25 | 55 | 100 | 25% |
| 75 | 50% | 37.5 | 25 | 62.5 | 100 | 25% |
| 50 | 20% | 10 | 50 | 60 | 100 | 50% |
| 50 | 30% | 15 | 50 | 65 | 100 | 50% |
| 50 | 40% | 20 | 50 | 70 | 100 | 50% |
| 50 | 50% | 25 | 50 | 75 | 100 | 50% |

It is also contemplated that this inventive process can be used to add PCR flake in other stages of the CP process, for example using the oligomer stream from the esterification section, mixing a diverted stream of this oligomer stream to the centrifugal mixer to mix and homogeneously melt the PCR flake, the resultant stream being pumped to the first stage of the polycondensation unit together with the undiverted stream. Alternatively for CP processes comprising more than one finishers, a portion of the outlet stream from one finisher can be diverted to the centrifugal mixer to mix and homogeneously melt the PCR flake, the resultant stream being pumped to the next finisher unit together with the undiverted stream.

### Test Methods

### Intrinsic viscosity

The intrinsic viscosity was measured in accordance to ASTM D4603-96 at 25° C.

### Color

The CIELAB color indices (L*, a* and b*) were measured in accordance with ASTM D6290-05 with a Konica Minolta Spectrometer Model CM-5 in a reflectance mode with d/8 illumination. D65 illuminant was used with a CIE 1964 10° standard observer. L* is a measure of brightness, a* is a measure of redness (+) or greenness (-) and b* is a measure of yellowness (+) or blueness (-).

### Examples

Prepolymer was obtained by extruding part of the polymer stream through a drain from the exit of the prepolymerizer, prior to the finisher, of a continuous polymerization unit manufacturing a standard bottle grade amorphous resin having an IV of 0.62 dl/g. The molten prepolymer was collected in a steel pan under nitrogen and, after cooling, ground into flakes.

PCR flake was obtained from Wellman France Recyclage S.A.S. The properties of the prepolymer and PCR flake are summarized in Table 3.

**Table 3**

| Property | Prepolymer | PCR Flake |
|---|---|---|
| IV, dl/g | 0.21 | 0.78 |
| Moisture Content, % | 0.21 | 0.18 |
| L* | n.m.¹ | 60.0 |
| a* | 0.5 | -2.3 |
| b* | 1.9 | 0.5 |

| | | |
|---|---|---|
| ¹ not measured, prepolymer ground to a different size than PCR flake. | | |

Trials were conducted on a pilot scale centrifugal mixer (Lico S.p.A.). The prepolymer was melted in an extruder at a melt temperature of 285° C, and fed at a controlled rate to one inlet of the mixer. The PCR was metered, without melting or drying, to the other inlet. The output from the mixer was quenched in air prior to solidification in a steel pan under nitrogen and, after cooling, ground into flakes.

Trials were run at throughputs from 27 to 249 kg/h, with % PCR flakes in the final product from 0% to 98%, at different mixer shaft rotational speeds from 142 to 767 rpm. The temperature of the melt exiting the mixer and the energy used in the mixer were recorded, and the IV and color indices of the final product measured. The results of these trials are summarized in Table 4.

**Table 4**

| **Trial** | **Temp. melt (°C)** | **RPM** | **Prepoly (kg/h)** | **PCR Flakes (kg/h)** | **% Flake** | **TM Rate (kg/h)** | **IV, dl/g** | **L*** | **a*** | **b*** | **MJ/kg** |
|---|---|---|---|---|---|---|---|---|---|---|---|
| 1 | 283.8 | 597 | 100 | 0 | 0% | 100 | 0.180 | n.m.¹ | -0.3 | 5.8 | 0.97 |
| 2 | 280.1 | 615 | 75 | 25 | 25% | 100 | 0.238 | 76.5 | -0.6 | 6.1 | 1.03 |
| 3 | 289.0 | 616 | 50 | 50 | 50% | 100 | 0.242 | 72.1 | -0.9 | 9 | 1.16 |
| 4 | 291.1 | 616 | 25 | 75 | 75% | 100 | 0.275 | 73.2 | -1.5 | 11.1 | 1.21 |
| 5 | 282.5 | 452 | 50 | 50 | 50% | 100 | 0.262 | 74.4 | -1.0 | 5.3 | 0.88 |
| 6 | 286.1 | 555 | 50 | 50 | 50% | 100 | 0.260 | 75.5 | -1.2 | 7.6 | 1.07 |
| 7 | 289.6 | 662 | 50 | 50 | 50% | 100 | 0.243 | 73.3 | -1.2 | 9.8 | 1.19 |
| 8 | 296.8 | 767 | 50 | 50 | 50% | 100 | 0.283 | 76.9 | -1.0 | 6.7 | 1.18 |
| 9 | 288.4 | 616 | 75 | 75 | 50% | 150 | 0.293 | 78.9 | -1.0 | 5.5 | 0.84 |
| 10 | 287.6 | 617 | 100 | 100 | 50% | 200 | 0.298 | 77.4 | -0.8 | 4.5 | 0.73 |
| 11 | 277.0 | 142 | 14 | 13 | 49% | 27 | 0.269 | 77.1 | -0.4 | 11.3 | 0.85 |
| 12 | 293.2 | 752 | 126 | 122 | 49% | 249 | 0.225 | 74.2 | -0.4 | 7.0 | 0.69 |
| 13 | 285.8 | 751 | 126 | 1 | 1% | 127 | 0.177 | 79.6 | 0.4 | 9.9 | 0.81 |
| 14 | 287.8 | 494 | 2 | 100 | 98% | 102 | 0.255 | 71.6 | -1.7 | 6.97 | 1.10 |

| | | | | | | | | | | | |
|---|---|---|---|---|---|---|---|---|---|---|---|
| ¹ not measured as polymer from trial 1 ground to a different size compared to all the other trials. | | | | | | | | | | | |

Trials 2, 3 and 4 were run at a constant throughput of 100 kg/h and at a shaft rotation speed of 615 rpm with PCR flake content of 25%, 50% and 75% respectively. The IV and color indices of the homogeneously mixed prepolymer indicate that this process can produce a satisfactory product to be polymerized in the finisher over a broad range of PCR content. In addition the power required to mix this range of PCR flake content was in a range of about 1.1 ± 0.1 MJ/kg.

Trials 5 to 8 were run at a constant PCR flake content of 50% and constant throughput of 100 kg/h and mixed at progressively increasing shaft rotational speeds and barrel temperatures. As with the previous trials, these trials indicate the flexibility of this process to homogeneously melt and mix PCR flakes with a molten prepolymer stream over a range of process parameters that can be chosen to optimize the properties of this molten mixture to match the requirements of the finisher unit to polymerize this mixture to the target properties of the final amorphous polymer.

Trials 9 and 10 were run with a 50% PCR content at higher throughputs of 150 and 200 kg/h compared to the previous trials. The lower energy, compared to trials at 100 kg/h, required to deliver a satisfactory mixed PCR flake/ prepolymer molten stream to the finisher of a continuous polymerization unit demonstrates the low energy required in this inventive process.

Trails 11 and 12 were run at nominally 25 and 250 kg/h and 50% PCR flake content. By increasing the shaft rotational speed at the high throughput, the IV and color indices of the PCR and prepolymer mixture demonstrates the flexibility of this inventive process to be operated over a range of throughputs to match the specific throughput of a continuous polymerization unit.

Trials 13 and 14 again show the flexibility of this inventive process to mix a range of PCR content from 1% to 98% with a prepolymer stream to provide a satisfactory product to be polymerized in the finisher of the CP unit.

These trials show that a centrifugal mixer can be used, over a range of conditions, to mix PCR flakes with part of the prepolymer stream from a CP unit while maintaining an IV at the exit of the mixer in the range of ± 0.05 dl/g of the inlet prepolymer. The stream from the mixer, after filtration, can be combined with the rest of the prepolymer stream, prior to the finishing section of the CP unit, without affecting the throughput of the CP unit.

## Claims

1. A method for manufacturing polyester polymer containing waste polyester in a continuous polymerization unit comprising the following steps:
a) providing an intermediate prepolymer stream from the continuous polymerization unit and diverting a portion of the intermediate prepolymer stream to a centrifugal mixer, and
b) adding waste polyester to said centrifugal mixer to obtain a homogenous melt stream, and
c) combining the homogenous melt stream with the remaining portion of the intermediate polymer stream forming an outlet stream,
wherein the method is **characterized in that** the waste polyester in step b) is not heated or melted.

2. The method according to Claim 1, wherein the waste polyester is PCR flake or post-industrial PET waste.

3. The method according to Claim 1, wherein the outlet stream contains up to 75% waste polyester.

4. The method according to Claim 1, wherein the difference between the intrinsic viscosities of the homogenous melt stream and the remaining portion of the intermediate polymer stream is in the range of about ± 0.10 dl/g as measured in accordance with ASTM D4603-96 at 25°C.

5. The method according to Claim 1, wherein the difference between the intrinsic viscosities of the homogenous melt stream and the remaining portion of the intermediate polymer stream is in the range of about ± 0.05 dl/g as measured in accordance with ASTM D4603-96 at 25°C.

6. The method according to Claim 1, wherein the residence time of the waste polyester in the centrifugal mixer is less than about 3 minutes.

7. The method according to Claim 1, wherein the energy used in the centrifugal mixer is between about 0.69 MJ/kg to about 1.21 MJ/kg.

8. The method according to Claim 1, further comprising an additional feed stream entering the centrifugal mixer containing a component selected from the group consisting of ethylene glycol, colorants, toners, dyes, mold release agents, flame retardants, plasticizers, stabilizers, chain extenders, impact modifiers and a combination thereof.

9. A system for manufacturing polyester polymer containing waste polyester, comprising:
a centrifugal mixer with at least a first inlet, a second inlet, and an outlet;
a first pipe configured to introduce polyester waste into the first inlet of the centrifugal mixer;
a prepolymer stream line configured to divert a portion of the prepolymer stream to the second inlet of the centrifugal mixer, wherein a homogenous melt stream exits the outlet of the centrifugal mixer; and
a mixing apparatus configured to combine the homogenous melt stream with the remaining portion of the intermediate polymer stream forming an outlet stream,
wherein the waste polyester is not heated or melted prior to entering the centrifugal mixer.

10. The system according to Claim 9, wherein the waste polyester is PCR flake or post-industrial PET waste.

11. The system according to Claim 9, wherein the outlet stream contains up to 75% waste polyester.

12. The system according to Claim 9, wherein the difference between the intrinsic viscosities of the homogenous melt stream and the remaining portion of the intermediate polymer stream is in the range of about ± 0.10 dl/g as measured in accordance with ASTM D4603-96 at 25°C.

13. The system according to Claim 9, wherein the difference between the intrinsic viscosities of the homogenous melt stream and the remaining portion of the intermediate polymer stream is in the range of about ± 0.05 dl/g as measured in accordance with ASTM D4603-96 at 25°C.

14. The system according to Claim 9, wherein the residence time of the waste polyester in the centrifugal mixer is less than about 3 minutes.

15. The system according to Claim 9, wherein the energy used in the centrifugal mixer is between about 0.69 MJ/kg to about 1.21 MJ/kg.

## Patentansprüche

1. Verfahren zur Herstellung von Polyesterpolymer, das Polyesterabfälle enthält, in einer kontinuierlichen Polymerisationseinheit, umfassend die folgenden Schritte:
a) Bereitstellen eines Prepolymer-Zwischenstroms aus der kontinuierlichen Polymerisationseinheit und Ableiten eines Teils des Prepolymer-Zwischenstroms zu einem Zentrifugalmischer und
b) Zugabe von Polyesterabfall zu dem Zentrifugalmischer, um einen homogenen Schmelzstrom zu erhalten, und
c) Vereinigen des homogenen Schmelzstroms mit dem verbleibenden Teil des Prepolymer-Zwischenstroms unter Bildung eines Auslassstroms,
wobei das Verfahren **dadurch gekennzeichnet ist, dass** der Polyesterabfall in Schritt b) nicht erhitzt oder geschmolzen wird.

2. Verfahren nach Anspruch 1, wobei der Polyesterabfall PCR-Flake oder postindustrieller PET-Abfall ist.

3. Verfahren nach Anspruch 1, wobei der Auslassstrom bis zu 75 % Polyesterabfälle enthält.

4. Verfahren nach Anspruch 1, wobei die Differenz zwischen den intrinsischen Viskositäten des homogenen Schmelzstroms und des verbleibenden Anteils des Prepolymer-Zwischenstroms im Bereich von etwa± 0,10 dl/g liegt, gemessen gemäß ASTM D4603-96 bei 25°C.

5. Verfahren nach Anspruch 1, wobei der Unterschied zwischen den intrinsischen Viskositäten des homogenen Schmelzstroms und des verbleibenden Anteils des Prepolymer-Zwischenstroms im Bereich von etwa± 0,05 dl/g liegt, gemessen gemäß ASTM D4603-96 bei 25°C.

6. Verfahren nach Anspruch 1, wobei die Verweilzeit der Polyesterabfälle in dem Zentrifugalmischer weniger als etwa 3 Minuten beträgt.

7. Verfahren nach Anspruch 1, wobei die im Zentrifugalmischer verwendete Energie zwischen etwa 0,69 MJ/kg und etwa 1,21 MJ/kg liegt.

8. Verfahren nach Anspruch 1, ferner umfassend einen zusätzlichen Zufuhrstrom, der in den Zentrifugalmischer eintritt und eine Komponente enthält, die aus der Gruppe ausgewählt ist, bestehend aus Ethylenglykol, Farbstoffen, Tonern, Färbemitteln, Formtrennmitteln, Flammschutzmitteln, Weichmachern, Stabilisatoren, Kettenverlängerern, Schlagzähigkeitsmodifikatoren und einer Kombination dieser.

9. System zur Herstellung von Polyesterpolymer, das Polyesterabfälle enthält, umfassend:
einen Zentrifugalmischer mit mindestens einem ersten Einlass, einem zweiten Einlass und einem Auslass;
ein erstes Rohr, das so konfiguriert ist, dass Polyesterabfälle in den ersten Einlass des Zentrifugalmischers eingeführt werden;
eine Prepolymerstromleitung, die so konfiguriert ist, dass sie einen Teil des Prepolymerstroms zum zweiten Einlass des Zentrifugalmischers umleitet, wobei ein homogener Schmelzstrom aus dem Auslass des Zentrifugalmischers austritt; und
eine Mischvorrichtung, die so konfiguriert ist, dass sie den homogenen Schmelzstrom mit dem verbleibenden Teil des Prepolymer-Zwischenstroms unter Bildung eines Auslassstroms kombiniert,
wobei der Polyesterabfall vor dem Eintritt in den Zentrifugalmischer nicht erhitzt oder geschmolzen wird.

10. System nach Anspruch 9, wobei der Polyesterabfall PCR-Flocken oder postindustrieller PET-Abfall ist.

11. System nach Anspruch 9, wobei der Auslassstrom bis zu 75 % Polyesterabfall enthält.

12. System nach Anspruch 9, wobei die Differenz zwischen den intrinsischen Viskositäten des homogenen Schmelzstroms und des verbleibenden Anteils des Prepolymer-Zwischenstroms im Bereich von etwa+ 0,10 dl/g liegt, gemessen gemäß ASTM D4603-96 bei 25°C.

13. System nach Anspruch 9, wobei der Unterschied zwischen den intrinsischen Viskositäten des homogenen Schmelzstroms und des verbleibenden Anteils des Prepolymer-Zwischenstroms im Bereich von etwa+ 0,05 dl/g liegt, gemessen gemäß ASTM D4603-96 bei 25°C.

14. System nach Anspruch 9, wobei die Verweilzeit des Polyesterabfalls in dem Zentrifugalmischer weniger als etwa 3 Minuten beträgt.

15. System nach Anspruch 9, wobei die im Zentrifugalmischer verwendete Energie zwischen etwa 0,69 MJ/kg und etwa 1,21 MJ/kg liegt.

## Revendications

1. Procédé de fabrication d'un polymère de polyester contenant des déchets de polyester dans une unité de polymérisation continue, comprenant les étapes suivantes :
a) fournir un flux de prépolymère intermédiaire à partir de l'unité de polymérisation continue et détourner une partie du flux de prépolymère intermédiaire vers un mélangeur centrifuge, et
b) ajouter du polyester usagé à ce mélangeur centrifuge pour obtenir un flux de matière fondue homogène, et
c) combiner le flux de matière fondue homogène avec la partie restante du flux de polymère intermédiaire pour former un flux de sortie,
le procédé étant **caractérisée en ce que** les déchets de polyester à l'étape b) n'est ni chauffé ni fondu.

2. Procédé selon la revendication 1, dans laquelle les déchets de polyester sont des flocons de PCR ou des déchets de PET post-industriels.

3. Procédé selon la revendication 1, dans lequel le flux de sortie contient jusqu'à 75 % de déchets de polyester.

4. Procédé selon la revendication 1, dans laquelle la différence entre les viscosités intrinsèques du flux de matière fondue homogène et de la partie restante du flux de polymère intermédiaire est de l'ordre d'environ+ 0,10 dl/g, mesurée conformément à la norme ASTM D4603-96 à 25°C.

5. Procédé selon la revendication 1, dans laquelle la différence entre les viscosités intrinsèques du flux de matière fondue homogène et de la partie restante du flux de polymère intermédiaire est de l'ordre d'environ+ 0,05 dl/g, mesurée conformément à la norme ASTM D4603-96 à 25°C.

6. Procédé selon la revendication 1, dans laquelle le temps de séjour du polyester usagé dans le mélangeur centrifuge est inférieur à environ 3 minutes.

7. Procédé selon la revendication 1, dans laquelle l'énergie utilisée dans le mélangeur centrifuge est comprise entre environ 0,69 MJ/kg et environ 1,21 MJ/kg.

8. Procédé selon la revendication 1, comprenant en outre un flux d'alimentation supplémentaire entrant dans le mélangeur centrifuge et contenant un composant choisi dans le groupe constitué par l'éthylène glycol, les colorants, les toners, les teintures, les agents de démoulage, les retardateurs de flamme, les plastifiants, les stabilisateurs, les allongeurs de chaîne, les modificateurs d'impact et une combinaison de ceux-ci.

9. Système de fabrication de polymère de polyester contenant des déchets de polyester, comprenant :
un mélangeur centrifuge avec au moins une première entrée, une deuxième entrée et une sortie ;
un premier tuyau configuré pour introduire les déchets de polyester dans la première entrée du mélangeur centrifuge ;
une conduite de flux de prépolymère configurée pour dévier une partie du flux de prépolymère vers la deuxième entrée du mélangeur centrifuge, dans laquelle un flux de matière fondue homogène sort de la sortie du mélangeur centrifuge ; et
un appareil de mélange configuré pour combiner le flux de fusion homogène avec la partie restante du flux de polymère intermédiaire, formant un flux de sortie,
dans lequel les déchets de polyester n'est pas chauffé ou fondu avant d'entrer dans le mélangeur centrifuge.

10. Système selon la revendication 9, dans lequel les déchets de polyester est un flocon de PCR ou un déchet PET post-industriel.

11. Système selon la revendication 9, dans lequel le flux de sortie contient jusqu'à 75 % de déchets de polyester.

12. Système selon la revendication 9, dans lequel la différence entre les viscosités intrinsèques du flux de matière fondue homogène et de la partie restante du flux de polymère intermédiaire est de l'ordre d'environ+ 0,10 dl/g, mesurée conformément à la norme ASTM D4603-96 à 25°C.

13. Système selon la revendication 9, dans lequel la différence entre les viscosités intrinsèques du flux de matière fondue homogène et de la partie restante du flux de polymère intermédiaire est de l'ordre de± 0,05 dl/g, mesurée conformément à la norme ASTM D4603-96 à 25°C.

14. Système selon la revendication 9, dans lequel le temps de séjour du déchets de polyester dans le mélangeur centrifuge est inférieur à environ 3 minutes.

15. Système selon la revendication 9, dans lequel l'énergie utilisée dans le mélangeur centrifuge est comprise entre environ 0,69 MJ/kg et environ 1,21 MJ/kg.
